# EUROPEAN PATENT APPLICATION

(11) **EP 1 235 187 A1**
(43) Date of publication of application: **28.08.2002**
(21) Application number: 00977952.1
(22) Date of filing: 27.11.2000
(51) Int. Cl.: G06T 15/70

(54) **IMAGE PROCESSOR, IMAGE PROCESSING METHOD, AND STORAGE MEDIUM**

(30) Priority: 25.11.1999 JP 33514799
(71) Applicant: Sony Computer Entertainment Inc., Tokyo 107-0052 (JP)
(72) Inventor: KASHIWABARA, K., Sony Computer Entertainment Inc., Tokyo 107-0052 (JP)
(74) Representative: Görz, Ingo
(86) International application number: JP0008339
(87) International publication number: WO01039129

(57) **Abstract**

An image generated in advance by rendering of a three-dimensional background scene is mapped over the inside surface of a virtual cylindrical model, and a viewing camera is defined on the center axis of the cylindrical model. A region clipped by a pyramidal visual field of the viewing camera is projected onto a display screen. In a CG animation, this image processing makes it possible to display a high-quality background image that is free of distortion due to a pan of the viewing camera.

## Description

### TECHNICAL FIELD

The present invention relates to a technique of a computer graphics for a generation of an animation of a video game or the like.

### BACKGROUND OF THE INVENTION

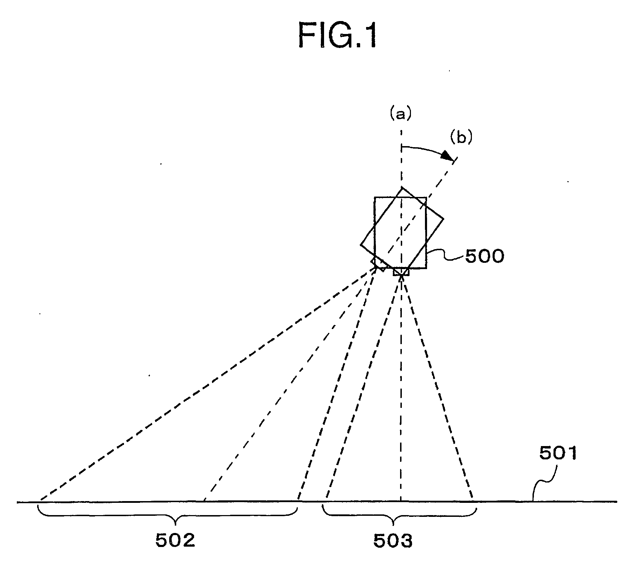

As shown in Fig. 1, a background of an animation of a video game or the like is generated by mapping a rendering-generated image of a three-dimensional background scene (hereinafter referred to as "pre-rendering image of a three-dimensional background scene") over a virtual plane 501. A virtual viewing camera 500 is defined for the plane 501. A visible region 503 or 502 that is clipping by the visual field of the viewing camera 500 is regularly subjected to rendering on the display screen of a display device. If the direction of the viewing camera 500 is changed in accordance with an input from a user, a resulting front view is displayed on the display screen of the display device in real time.

However, since a pre-rendering image of a three-dimensional background scene is mapped over the virtual plane 501, an image on the display screen may be distorted depending on the direction of the viewing camera 500. That is, if the front side of the viewing camera 500 is directed squarely to the virtual plane 501 (direction (a) in Fig. 1), a proper image 503 without distortion is displayed on the display screen. However, if the viewing camera 500 is panned rightward, leftward, upward, or downward (direction (b) in Fig. 1), an image 502 whose peripheral region is distorted is displayed on the display screen.

Further, if a close-range view is. included in a three-dimensional scene for generation of a pre-rendering image to be mapped over the virtual plane 501, when, for example, the viewing camera 500 is panned, there may occur a case that a close-range-view image on the display screen is out of perspective and hence the image on the display screen seems unnatural. For this reason, usually, the above-described background image generation technique is applied to only a distant view.

### SUMMARY OF THE INVENTION

An object of the present invention is to make it possible to display a high-quality background image that is free of distortion due to a pan of a viewing camera in a 3D-CG animation. To attain the above object, the present invention provides an image processing apparatus for displaying a three-dimensional image on a display screen of a display device, comprising rendering means for rendering, from a virtual viewing camera defined at a center of curvature of a curve that is included in a virtual curved surface over which an image generated by rendering of a three-dimensional background scene is mapped, a model included in a region clipped by a visual field of the viewing camera, and for outputting a resulting rendering image to the display device; and moving image control means for rotating the viewing camera in a plane including the curve.

Each of the above means may be a thing realized by hardware, or a process or the like realized by execution of software.

### BRIEF DESCRIPTION OF THE DRAWINGS

Fig. 1 illustrates problems of conventional 3D-CG animation;
Fig. 2 shows appearances of an entertainment apparatus and a controller according to one embodiment of the present invention;
Fig. 3 shows a hardware configuration of the entertainment apparatus according to the embodiment of the invention;
Fig. 4 shows a functional configuration of the entertainment apparatus according to the embodiment of the invention;
Fig. 5 is a flowchart showing a game process that is executed by the entertainment apparatus according to the embodiment of the invention;
Fig. 6 is a flowchart showing an image process that is executed by the entertainment apparatus according to the embodiment of the invention;
Fig. 7 illustrates a positional relationship between a viewing camera and a cylindrical model in rendering according to the embodiment of the invention;
Fig. 8 is a flowchart showing a game process that is executed by the entertainment apparatus according to the embodiment of the invention; and
Fig. 9 illustrates a positional relationship between a viewing camera and a spherical model in rendering according to the embodiment of the invention.

### DESCRIPTION OF THE PREFERRED EMBODIMENT

An embodiment of the present invention will be hereinafter described with reference to the accompanying drawings. This embodiment is directed to a case where the invention is applied to an apparatus capable of executing image processing for a video game, that is a computer entertainment apparatus.

First, the configuration of an entertainment apparatus according to the embodiment will be described.

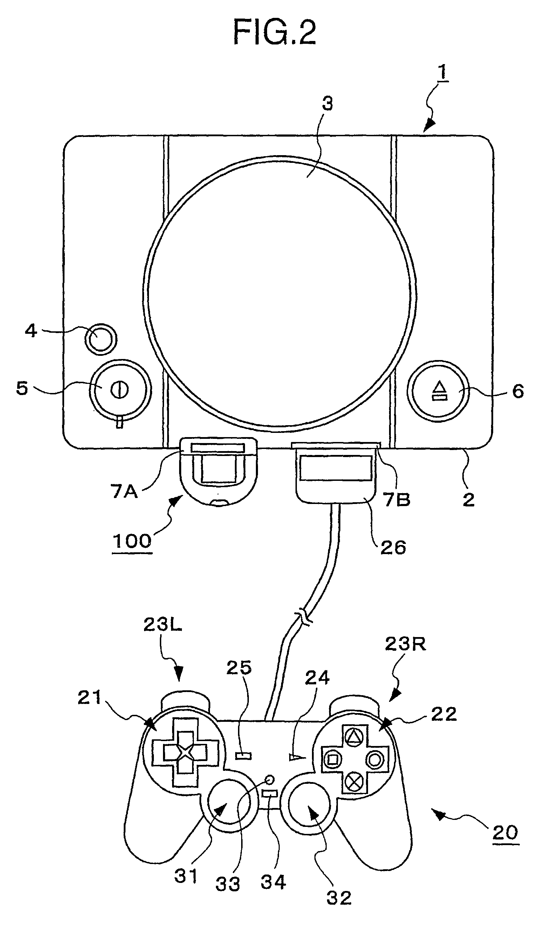

Fig. 2 shows appearances of the entertainment apparatus and its peripheral device according to the embodiment.

A disc mounting section 3 of a disc drive is provided at the center of the entertainment apparatus 1. The disc mounting section 3 can mount a storage medium such as an optical disc (e.g., a CD-ROM) storing an application program that defines processes of a video game or the like and related data (e.g., plural kinds of pre-rendering image data obtained by performing rendering of a three-dimensional background scene on the inside surface of a virtual cylinder from a viewing point located on the center axis of the virtual cylinder and shape data of a mapping cylinder having the same curved surface shape as the virtual cylinder).

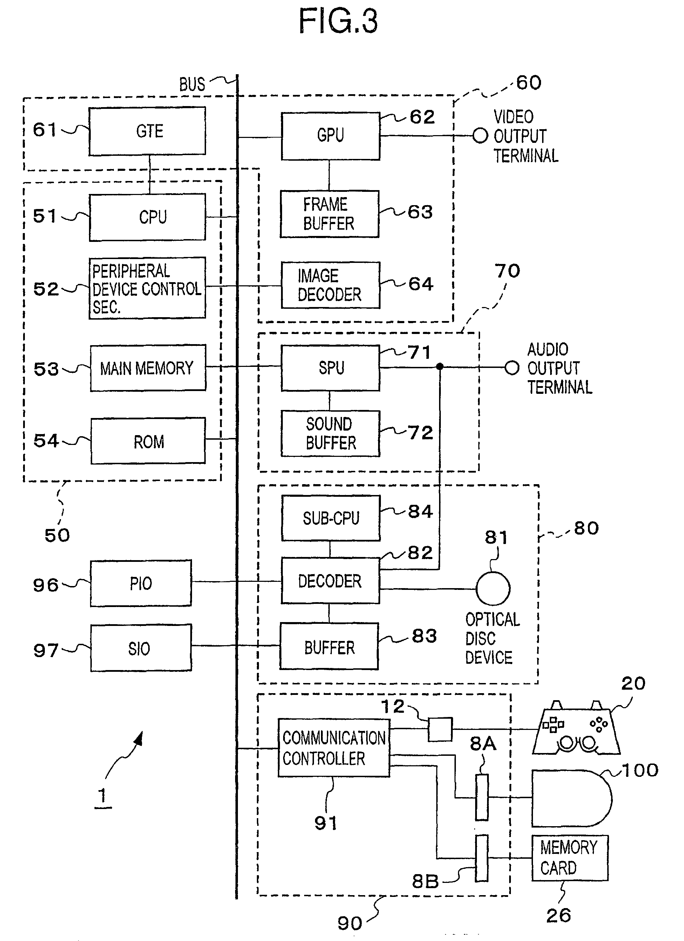

Various switches 4-6, a plurality of slot portions (in this embodiment, two slot portions 7A and 7B), etc. are provided on the top of the entertainment apparatus 1. For example, the switches thus provided include a reset switch 4 for resetting a game, a power switch 5, and an open switch 6 for opening the cover of the disc mounting section 3. The slot portions 7A and 7B are provided with memory card connection portions 8A and 8B respectively (see Fig. 3), and a controller connection portion 12 (see Fig. 3). A controller 20 for accepting input from a user who is a game player can be connected detachably to the controller connection portion 12 of each of the slot portions 7A and 7B. Therefore, two game players can play a game by connecting the connectors of two controllers 20 to the respective controller connection portions 12. An auxiliary storage device (e.g., a memory card 26) capable of loading and saving game data (e.g., setting data of a game), another portable electronic device 100, or the like can be connected to the memory card connection portions 8A and 8B of the slot portions 7A and 7B. The memory card 26 or the portable electronic device 100 can be connected to or removed from the memory card connection portion 8A or 8B with the power kept applied to the apparatus main body. Therefore, when shortage of storage capacity has occurred in the memory card 26 or the like in a state that it is connected to the memory card connection portion 8A or 8B, the game player can replace the memory card 26 or the like being connected to the memory card connection portion 8A or 8B with a new one with the power kept applied to the apparatus main body.

Audio output terminals, a video output terminal, etc. (not shown) are provided on the back surface of the entertainment apparatus 1.

On the other hand, a left button 23L and a right button 23R are provided on the side of the controller 20. Two kinds of operation portions 21 and 22, a start button 24, a selection button 25, two analog operation portions 31 and 32, a mode selection switch 33 for selecting an analog mode (i.e., a mode in which the analog operation portions 31 and 32 work), and an LED indicator 34 that is turned on when the analog mode is selected are provided on the top of the controller 20. When any of the left button 23L, the right button 23R, the operation portions 21 and 22, the start button 24, the selection button 25, the analog manipulation portions 31 and 32, and the mode selection switch 33 among the above tools is operated by a game player, the controller 20 generates a detection signal of the manipulation. Detection signals of operations performed on the left button 23L, the right button 23R, the operation portions 21 and 22, and the analog operation portions 31 and 32 are assigned to actions in an image being displayed on the display screen of a display device. For example, if a key assigned to change of the direction of a player character among the keys of the operation portions 21 and 22 is depressed by a game player and the controller 20 generates a detection signal of this operation, the direction of the player character being displayed on the display screen of the display device is changed to a direction assigned to the key by a rotation angle corresponding to a key depression time.

Operation methods of each of the analog operation portions 31 and 32 include pressing the top of a stick and inclining the stick in a certain direction.

Fig. 3 shows a hardware configuration of the entertainment apparatus 1.

The entertainment apparatus 1 includes a control system 50, a graphic system 60, a sound system 70, an optical disc control section 80, a communication control section 90, a parallel I/O interface (PIO) 96 and a serial I/O interface (SIO) 97 for connection to another apparatus, and a bus for connecting the above components to each other. The details of the systems and sections 50, 60, 70, 80, and 90 are as follows.

The control system 50 has a central processing unit (CPU) 51 for controlling the entire entertainment apparatus 1, a peripheral device control section for performing various kinds of control processing (e.g., interrupt control processing and direct memory access (DMA) transfer control processing), a main memory 53 that comprises a random access memory (RAM), a read-only memory (ROM) 54 which stores control programs (programs of what is called an operating system and other programs) to be executed by the CPU 51, and other components.

When the power is applied to the entertainment apparatus 1, the CPU 51 loads the operating system from the ROM 54 into the main memory 53 and activates the operating system. As a result, control on the graphic system 60, the sound system 70, etc. is started. After activating the operating system, the CPU 51 performs initialization such as operation checks and then loads an application program from the optical disc mounted in the disc mounting section 3 into the main memory 53 and runs the application program. As a result, a game process defined by the application program is started. The CPU 51 may be a RISC-CPU, for example.

The peripheral device control section 52 performs interrupt control processing and direct memory access (DMA) transfer processing in which data transfer is directly performed between individual components (the main memory 53, a GPU 62. an image decoder 64, a decoder 82, etc.) without intervention of the CPU 51. This reduces the load on the CPU 51 relating to data transfer, thereby increasing the speed of data transfer in program reading, image display and drawing, etc.

The graphic system 60 has a geometry transfer engine (GTE) 61, a graphic processing unit (GPU) 62, a frame buffer 63, an image decoder 64, a video output terminal, etc.

The GTE 61 performs matrix operations, vector operations, or the like in a coordinate transform in response to a request from the CPU 51. For example, in rendering a three-dimensional space, the GTE 61 performs a perspective projection that projects a three-dimensional object that is expressed approximately by a plurality of polygons onto a virtual camera screen, that is, performs a projection transform of the vertex coordinates of the plurality of polygons. If the GTE 61 is provided with a parallel operation mechanism that performs a plurality of operations in parallel, the speed of a coordinate transform can be increased.

The frame buffer 63 is what is called a dual-port RAM. That is, writing by the GPU 62 or transfer from the main memory 53 can be performed at the same time as image data reading for image display is performed. During execution of a game, an image area for storing image information of a display image, a texture area for storing textures (e.g., a pre-rendering image of a three-dimensional background scene) to be used for texture mapping by the GPU 62 (described below), and other areas are allocated in the frame buffer 63.

The GPU 62 performs texture mapping in response to a request from the CPU 51 while utilizing the GTE 61 when necessary. By performing the texture mapping, a pre-rendering image of a three-dimensional background scene is mapped to the inside surface of a cylindrical model having the same curved surface shape as a virtual cylinder on which the three-dimensional background scene is projected. Further, in response to a request from the CPU 51, the GPU 62 performs processing (1) in which the GPU 62 renders three-dimensional models included in a region that is clipped by the visual field of a viewing camera that is defined in a three-dimensional space and translates the resulting rendering data into pixel data on the frame buffer 63 while utilizing the GTE 61 when necessary, processing (2) in which the GPU 62 reads out the contents of the frame buffer 63, converts those into a video signal, and outputs the video signal from the video output terminal, and other processing.

Among techniques of rendering that is performed by the GPU 62, the Z buffer algorithm, the scan line algorithm, the ray tracing algorithm, or the like may be used for hidden line/hidden surface removal and the flat shading, the Gauroud shading, the ray tracing algorithm, or the like may be used for shading.

In response to a request from the CPU 51, the image decoder 64 reads out, from the main memory 53, pre-rendering image data obtained through compression and coding by orthogonal transform such as discrete cosine transform, decodes the pre-rendering image data, and stores the decoded data in the main memory 53. The regenerated image data are stored in the frame buffer 63 by the GPU 62 and used as textures to be mapped over the inside surface of the above-mentioned cylindrical model.

The sound system 70 has an SPU (sound processing unit) 71, a sound buffer 72 in which sound waveform data or the like are stored by the SPU 71, and an audio output terminal. The SPU 71 has an adaptive differential PCM (ADPCM) decoding function of decoding sound waveform data that were subjected to ADPCM, a regenerating function of outputting an audio signal (a musical sound, an effect sound, or the like) from the audio output terminal by regenerating sound waveform data stored in the sound buffer 72, a modulation function of modulating and regenerating sound waveform data stored in the sound buffer 72, and other functions. By using the above functions, the sound system 70 plays a role of what is called a sampling sound source for generating an audio signal (a musical sound, a sound effect, or the like) based on sound waveform data stored in the sound buffer 72.

The optical disc control section 80 has an optical disc device 81, a decoder 82, a buffer 83, and a sub-CPU 84 that is connected to the decoder 82.

The optical disc device 81 regenerates a recording signal (an application program, a sound waveform data, or the like) from the optical disc that is mounted in the disc mounting section 3. The decoder 82 decodes the regenerated signal to which error correction codes (ECCs), for example, are added. Data outputted from the optical disc device 81 are stored temporarily in the buffer 83, thereby increasing the speed of reading data from the optical disc.

Sound waveform data recorded on an optical disc include not only ADPCM data that are supplied to the SPU 71 after being decoded by the decoder 82 but also what is called PCM data obtained by analog-to-digital-converting an audio signal. Such PCM data are decoded by the decoder 82 and then outputted from the audio output terminal as an audio signal.

The communication control section 90 has a communication controller 91 to which the above-mentioned slot portions 7A and 7B are connected. The communication controller 91 controls communication between the CPU 51 and a device (the memory card 20, the portable electronic device 100, or the like) connected to the memory card connection portions 8A or 8B and between the CPU 51 and the controller 20 connected to the controller connection portion 12. The communication controller 91 contains a protective circuit for preventing electrical breakdown.

When it is necessary to save game data of a game being executed, the communication controller 91 writes the game data to the memory card 26 connected thereto, a built-in memory of the portable electronic device 100 connected thereto, or a like device under the control of the CPU 51.

According to instructions from the communication controller 91, the controller 20 that is connected to the controller connection portion 12 sequentially transmits, to the communication controller 91, by synchronous communication, signals corresponding to operations of a player, that is, signals indicating the states of the buttons 23L, 23R, 24, 25, and 33 and the operation portions 21, 22, 31 and 32. When receiving those signals, the communication controller 91 transmits signals indicating the states of the buttons and operation portions of the controller 20 to the CPU 51. As a result, the instructions of the player are inputted to the CPU 51 and the progress of a game reflects the contents of the instructions. Specifically, under the control of the CPU 51, the graphic system 60 performs rendering regularly in visual regions that are clipped by the visual field of a viewing camera that is defined on the center axis of a background cylindrical model (a cylindrical three-dimensional model over whose inside surface a pre-rendering image of a three-dimensional background scene is mapped; described later) while changing the direction of the viewing camera in accordance with the content of an instruction from the player and displays a resulting rendering image on the display screen of a display device (e.g., a TV receiver) that is connected to the video output terminal. As a result, the background image on the display screen of the display device changes as if the point of attention moved in accordance with the instruction of the player. Further, under the control of the CPU 51, the sound system 70 causes a audio device (e.g., the speakers of a TV receiver) that is connected to the audio output terminal to output a sound.

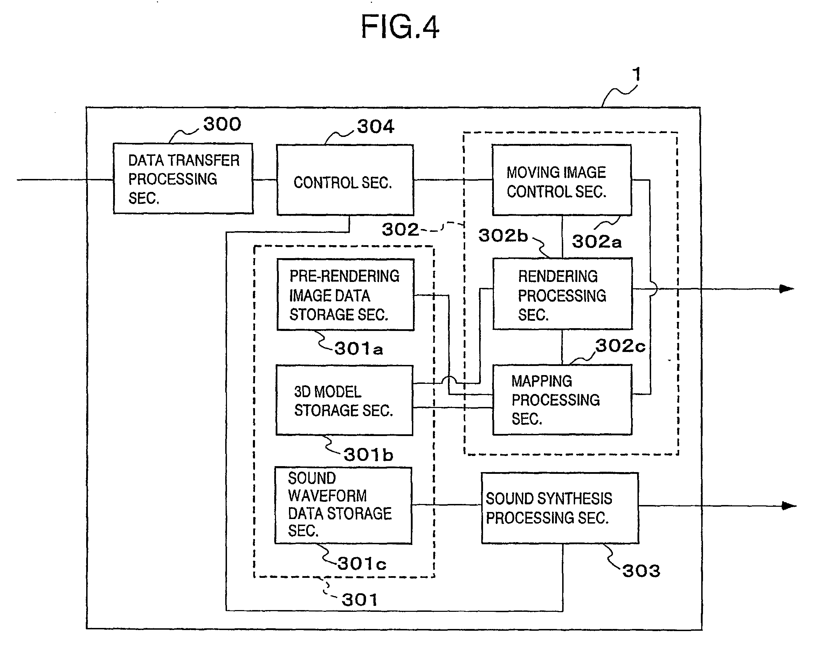

The above hardware configuration and an application program etc. loaded from an optical disc into the main memory 53 implement a functional configuration shown in Fig. 4 that includes a data transfer processing section 300 for controlling data transfer to or from the controller 20 or the like, a storage section 301 that holds various data that are necessary for the progress of a game, a moving image generation processing section 302 for generating a moving image based on data being held by the storage section 301, a sound synthesis processing section 303 for synthesizing a sound based on sound waveform data being held by the storage section 301, and a control section 304 for controlling the above processing sections according to the progress of a game.

The storage section 301 includes a pre-rendering image data storage section 301a, a three-dimensional model storage section 301b, and a sound waveform data storage section 301c. The sound waveform storage section 301c stores sound waveform data such as sound effect of a game. The three-dimensional model storage section 301b stores data relating to various three-dimensional objects to be disposed in a three-dimensional space, examples of which are shape data of a cylindrical model over whose inside surface a pre-rendering image of a three-dimensional space is to be mapped, shape data of three-dimensional models of movable objects such as a player character to appear in a game, and shape data of three-dimensional models of still objects such as a door. The pre-rendering image data storage section 301a stores two or more kinds of pre-rendering image data of three-dimensional background scenes to be mapped over the inside surface of a cylindrical model. It is desirable that those pre-rendering image data of three-dimensional background scenes be data generated by, for example, one of methods (1) in which a three-dimensional background scene is projected onto the inside surface of a virtual cylinder having the same curved surface shape as a mapping cylindrical model from a viewing point that is defined on the center axis of the virtual cylinder, and method (2) in which a plurality of images that are obtained by projecting a three-dimensional background scene located in front of a viewing point defined at a prescribed position onto a virtual plane while the viewing point is rotated by a proper angle at each time are connected to each other so as to be located on a curved surface having the same shape as a mapping cylindrical model.

The image generation processing section 302 has a mapping processing section 302c for generating a plurality of background cylindrical models by mapping pre-rendering images of three-dimensional background scenes over the inside surface of a cylindrical model, a rendering processing section 302b for rendering, in real time, models that are included in the visual region of a viewing camera that is defined on the center axis of a background cylindrical model, and a moving image control section 302a for controlling the direction of the viewing camera according to an instruction from the control section 304.

The entertainment apparatus 1 implements the above functional configuration by loading an application program etc. from the optical disc mounted in the disc mounting section 3 into the main memory 53 and executing the application program. A process suitable for the story of a game is executed by the individual processing sections of the functional configuration. Such a process will be described below.

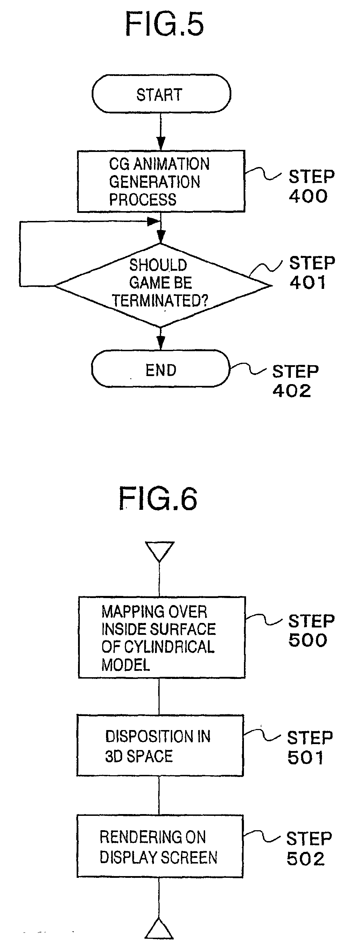

As shown in Fig. 5, when a game has started, first, the control section 304 gives the image generation processing section 302 an instruction to start a 3D-CG animation generation process (Step 400). In response, the image generation processing section 302 starts the CG animation generation process (see Fig. 6; described later). During the execution of the CG animation generation process, the control section 304 judges the game status regularly while receiving, from the communication processing section 300, input information that is supplied from the controller 20 and executes a process (described later) corresponding to the input information (Step 401). If a termination condition that is predetermined for the game is satisfied, the control section 304 finishes the process after causing the image generation processing section 302 to display an end message on the display screen (Step 402).

When receiving an instruction to start a CG animation generation process, as described above the image generation processing section 302 executes the CG animation generation process shown in Fig. 6, which will be described below.

First, in response to an instruction from the moving image control section 302a, the mapping processing section 302c fetches pre-rendering image data of a three-dimensional background scene from the pre-rendering image data storage section 301a and fetches, from the three-dimensional model storage section 301b, shape data of a cylindrical model to be used for mapping of the pre-rendering image data. The mapping processing section 302c generates a background cylindrical model, which has a background image on its inside surface, by mapping the pre-rendering image over the inside surface of the cylindrical model (Step 500).

In response to an instruction from the moving image control section 302a, the rendering processing section 302b disposes the background cylindrical model at a prescribed position in a three-dimensional space that is defined by a world coordinate system. Further, the rendering processing section 302b fetches a character model from the three-dimensional model storage section 301b and disposes it at an initial position inside the background cylindrical model (Step 501).

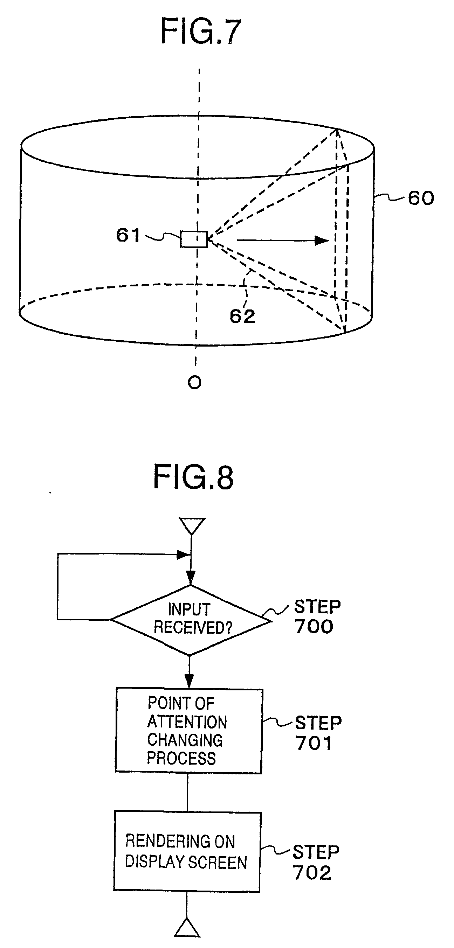

After defining a light source at a prescribed position inside the background cylindrical model, the rendering processing section 302b defines a viewing camera 61 at a prescribed position (having, with respect to the background cylindrical model 60, the same positional relationship as was set between the virtual cylinder and the viewing point when the pre-rendering image of the three-dimensional background scene was generated) on the center axis O of the background cylindrical model 60 as shown in Fig. 7 and projects models included in a visible region clipped by a pyramidal visual field 62 of the viewing camera 61 onto a display screen regularly (Step 502). For example, the point of attention of the viewing camera 61 may be set in front of the character model at this time.

As a result, a background image having the character appearing in the game as a foreground image is displayed on the display screen of the display device. Where a background pre-rendering image is used in this manner, it is sufficient to perform rendering of a background on the display screen only once. Therefore, the processing speed can be made higher than in a case where a plurality of three-dimensional objects such as buildings are disposed in a three-dimensional space to form a background. Therefore, even if the processing abilities of the GPU 62 etc. are low, a high-quality background image can be displayed quickly on the display screen in accordance with an operation of a player on the controller 20.

After start of the above CG animation generation process, as described above, the control section 304 is on standby until the controller 20 receives input information from the game player. When receiving, via the communication control section 300, input information that is supplied from the controller 20 (step 700), the control section 304 gives a sound output instruction to the sound synthesis section 303 when necessary and instructs the image generation processing section 302 to change the point of attention of the viewing camera 61 if the input information specifies a movement distance of the character model.

In response, the image generation processing section 302 executes a process of changing the point of attention (Step 701). Specifically, the moving image control section 302a calculates a post-movement position and direction of the character model based on the input information and moves the character model from the current position in the three-dimensional space in accordance with calculation results. The rendering processing section 302b sets a new point of attention in front of the moved character model, for example, and rotates the viewing camera 61 in the plane perpendicular to the center axis O of the background cylindrical model 60, that is, about the center axis O of the background cylindrical model 60, so that the front side of the viewing camera 61 is directed to the point of attention. Regions that are clipped by the pyramidal visual field of the rotated viewing camera 61 are projected onto the display screen regularly (Step 702).

As a result, a moving image is displayed on the display screen of the display device as if the player character moved according to an instruction of the player and the background image changed as the player character moves. Since the viewing camera 61 is defined on the center axis O of the background cylindrical model 60 having a background image on its inside surface, the distance between the front side of the viewing camera 61 and the inside surface of the background cylindrical model 60 remains the same even if the viewing camera 61 is directed to any direction in the plane perpendicular to the center axis O. Therefore, no distortion occurs in a peripheral region of an image on the display screen of the display device. That is, a pan of the viewing camera 61 does not cause any distortion in a peripheral region of a background image on the display screen.

Where a background image is always separated from the front side of the viewing camera 61 by the same distance even if the viewing camera 61 is directed to any direction, a pan of the viewing camera 61 does not impair the perspective in the background on the display screen. Therefore, even if both of a distant view and a close-range view are included in a background, a pan of the viewing camera 61 does not make the background on the display screen of the display device unnatural. If both of a distant view and a close-range view are included in a background, it is not necessary to perform rendering separately for each of the distant view and the close-range view and hence the loads of the CPU 51 can be reduced.

The terms "close-range view" and "distant view" as used herein are distinguished from each other by the distance from the viewing point that is employed in generating a pre-rendering image of a three-dimensional background scene, that is, the Z-axis coordinate (depth information) of a three-dimensional coordinate system that is defined in the three-dimensional space where three-dimensional objects constituting the three-dimensional background scene are disposed and that has the viewing point as the origin. Specifically, a proper Z-axis coordinate in the three-dimensional coordinate system is set as a reference coordinate and the distant view and the close-range view are distinguished from each other by the distance from the reference position. For example, where the z-axis coordinate of a three-dimensional object that is most distant from the viewing point among the three-dimensional objects constituting a three-dimensional background scene is employed as a reference coordinate, a three-dimensional object whose Z-axis coordinate is the same as the reference coordinate is made a distant view, and a three-dimensional object closer to the viewing camera than the reference coordinate is made a close-range view.

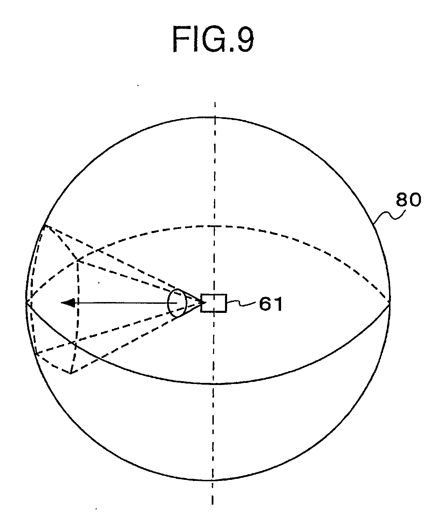

Although in this embodiment a pre-rendering image of a three-dimensional scene is mapped over the inside surface of a cylindrical model, the surface over which a pre-rendering image is mapped may not necessarily be the inside surface of a cylindrical model. It may be a curved surface whose distance from the front side of a viewing camera located at a prescribed position is kept the same even if the viewing camera is rotated, such as a curved surface including at least part of a revolution surface. For example, as shown in Fig. 9, a pre-rendering image of a three-dimensional background scene may be mapped over the inside surface of a spherical model 80 and a viewing camera 61 may be defined at the center of the spherical model 80. Where in this manner a pre-rendering image is mapped over the inside surface of the virtual sphere 80, a pan of the viewing camera 61 in any of the rightward, leftward, upward, and downward directions does not cause any distortion in a peripheral region of a background image on the display screen. However, in this case, as described above, it is necessary to generate a pre-rendering image of a three-dimensional background scene by, for example, projecting the three-dimensional background scene from a viewing point defined at the center of a virtual sphere having the same shape as a spherical model, wherein the pre-rendering image should be mapped onto the inside surface of the virtual sphere.

In this embodiment, a background model is generated by mapping a pre-rendering image of a three-dimensional background scene over the inside surface of a cylindrical model or the like during a CG animation generation process. However, the invention is not limited to such a case. For example, a background model of which a pre-rendering image of a three-dimensional background scene is mapped over the inside surface in advance may be stored in a storage medium. In this case, a necessary processing to be performed is only to dispose, in a three-dimensional space, a background model that is read out from the storage medium. Therefore, it is not necessary that the CG animation generation process include the mapping process of a pre-rendering image of a three-dimensional background scene. That is, the mapping processing section 302c can be eliminated from the functional configuration of the apparatus.

This embodiment is directed to the case where the invention is applied to an entertainment apparatus capable of executing a video game. However, the scope of the invention is not limited thereto. For example, the invention can broadly be applied to computer entertainment apparatus (including information processing apparatuses) capable of executing various application programs other than game programs. As described above, the use of the invention makes it possible to display a high-quality background image that is free of distortion due to a pan of a viewing camera in a CG animation generated by any of those entertainment apparatuses.

### INDUSTRIAL APPLICABILITY

As described hereinbefore, in this invention, it is possible to display a high-quality background image that is free of distortion due to a pan of a viewing camera in a 3D-CG animation.

## Claims

1. An image processing apparatus for displaying a three-dimensional image on a display screen of a display device, comprising:
rendering means for rendering, from a virtual viewing camera defined at a center of curvature of a curve that is included in a virtual curved surface over which an image generated by rendering of a three-dimensional background scene is mapped, a model included in a region clipped by a visual field of the viewing camera, and for outputting a resulting rendering image to the display device; and
moving image control means for rotating the viewing camera in a plane including the curve.

2. The image processing apparatus according to claim 1,
wherein the curved surface is an inside surface of a sphere or an inside surface of a cylinder, and
wherein the viewing camera is located at the center of the sphere or on the center axis of the cylinder.

3. A storage medium storing a program for allowing an image processing apparatus to execute an image process of displaying a three-dimensional image on a display screen of a display device is stored, wherein the image process comprises rotating a virtual viewing camera defined at a center of curvature of a curve that is included in a virtual curved surface over which an image generated by rendering of a three-dimensional background scene is mapped, rendering a model included in a region clipped by a visual field of the virtual viewing camera, and outputting a resulting rendering image to the display device.

4. An image generation method for allowing an image processing apparatus to execute an image process of displaying a three-dimensional image on a display screen of a display device, wherein the image process comprises rotating a virtual viewing camera defined at a center of curvature of a curve that is included in a virtual curved surface over which an image generated by rendering of a three-dimensional background scene is mapped, rendering a model included in a region clipped by a visual field of the virtual viewing, and outputting a resulting rendering image to the display device.

5. A program for allowing an image processing apparatus to execute an image process of displaying a three-dimensional image on a display screen of a display device, wherein the image process comprises rotating a virtual viewing camera defined at a center of curvature of a curve that is included in a virtual curved surface over which an image generated by rendering of a three-dimensional background scene is mapped, rendering a model included in a region clipped by a visual field of the virtual camera, and outputting a resulting rendering image to the display device while rotating the viewing camera.
